# EUROPEAN PATENT APPLICATION

(11) **EP 1 581 012 A1**
(43) Date of publication of application: **28.09.2005**
(21) Application number: 03810638.1
(22) Date of filing: 06.11.2003
(51) Int. Cl.: H04N 13/02, H04N 15/00, G02B 27/22

(54) **THREE-DIMENSIONAL VIDEO PROCESSING METHOD AND THREE-DIMENSIONAL VIDEO DISPLAY**

(30) Priority: 07.11.2002 JP 2002324429
(71) Applicant: SANYO ELECTRIC CO., LTD., Osaka 570-8677 (JP)
(72) Inventor: MASHITANI, Ken, Neyagawa-shi, Osaka 572-0839 (JP); HAMAGISHI, Goro, Toyonaka-shi, Osaka 561-0802 (JP)
(74) Representative: Read, Matthew Charles
(86) International application number: PCT/JP2003/014166
(87) International publication number: WO 2004/043079

(57) **Abstract**

A stereoscopic image processing method for extracting a plurality of dots, i.e., a pixel unit, from a plurality of viewpoint images by each viewpoint image. Data of the plurality of dots serving as a pixel unit is extracted from each viewpoint image, and an aggregate of such the data is defined as a pixel group. A dot cluster of 21 dots surrounded by bold lines constitutes one pixel group. An aperture 1 corresponds to each pixel group, and from a specific observing position, dots in three colors of {1; 11; R}, {1; 11; G}, and {1; 11; B} constituting an upper left pixel of a viewpoint 1 are simultaneously observed. An arrangement of pixels in the pixel group is set so that an aspect ratio of a displayed pitch of the pixel group is rendered most approximate to 1:1.

## Description

### TECHNICAL FIELD

The present invention relates to a stereoscopic image display and a stereoscopic image processing method capable of performing a stereoscopic vision without requiring special glasses.

### PRIOR ART

Conventionally, as a method for realizing a stereoscopic image displaying without requiring special glasses, a parallax barrier method, a lenticular lens method, and others are known. In these methods, a right-eye image and a left-eye image that have a binocular parallax, are displayed on a screen one after the other in a vertical stripe shape, for example, and this displayed image is separated by a parallax barrier, a lenticular lens, and others, which is introduced to each of right and left eyes of an observer, thus allowing a stereoscopic vision to be performed.

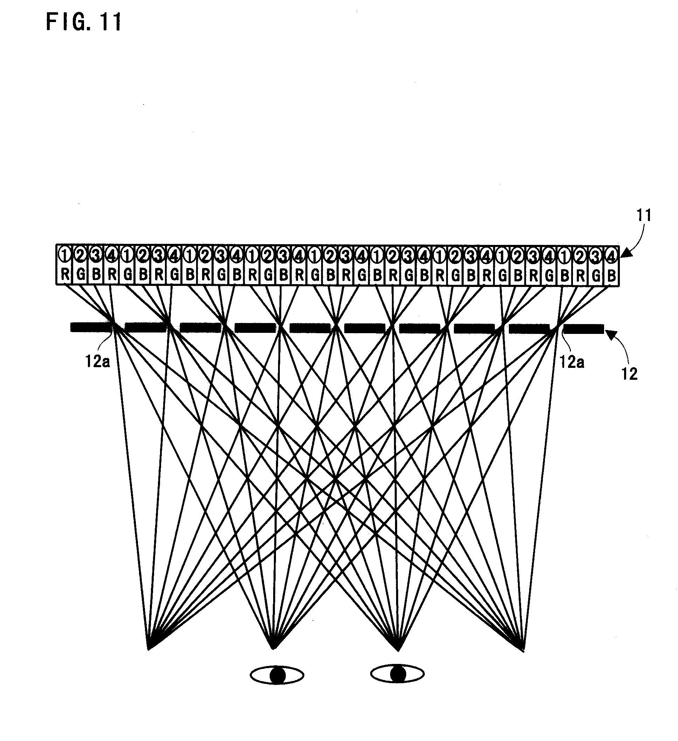

Figure 11 is a descriptive diagram illustrating a principle of a stereoscopic image display of a four-viewpoint type stereoscopic vision system. An image ①, an image ②, an image ③, and an image ④ having the binocular parallax in a horizontal direction of Figure 11 are aligned at a predetermined pitch, and a unit image group of the "image ①, image ②, image ③, and image ④" exists repeatedly. Apertures 12a of image separating means 12 exist in such a manner as to correspond to each unit image group, and separate the "image ①, image ②, image ③, and image ④", i.e., each unit image group, so as to be applied to the observer.

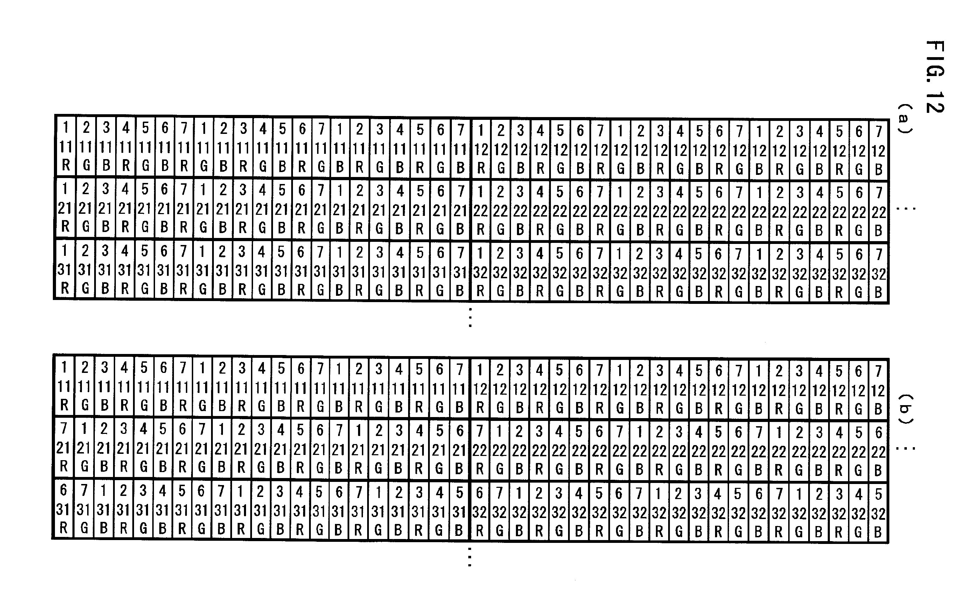

Figure 12 shows an aligning manner of dots and displayed dot data of a seven-viewpoint type stereoscopic image system. A dot cluster of 21 dots surrounded by a bold line in Figure 12 constitutes one pixel group, three pinholes (apertures) correspond thereto, and from a specific observing position, the dots in three colors of {1; 11; R}, {1; 11; G}, and {1; 11; B} constituting an upper left pixel of a viewpoint 1 is simultaneously observed. Herein, {i; jk; C} represents {viewpoint; pixel coordinates; color}, respectively. In addition, according to a movement of the observing position, the pixels having different viewpoints such as {2; 11; G}, {2; 11; B}, {2; 11; R} ... are to be observed regarding the same pixel coordinates 11.

In a stereoscopic image processing method adopting a dot alignment manner and displayed dot data shown in Figure 12 (a), only the number of pixels in a horizontal direction is to be decreased (deteriorated) to 1/7. This means that a horizontal pitch of the pixel is rendered seven times greater, so that a value of a ratio of the horizontal pitch to a vertical pitch becomes seven.

If this concept is applied to a seven-viewpoint type stereoscopic image display using an image separating means (not shown) in which the pinholes are aligned in an oblique direction, the dot alignment manner and the displayed dot data are realized as shown in Figure 12 (b). Although a configuration of the pixel group is the same, an alignment of viewpoint numbers within the group is changed. Herein, too, the number of pixels of the horizontal direction is similarly deteriorated. In a case that there is a parallax only in the horizontal direction like this, the number of pixels is generally to be decreased (deteriorated) only in the horizontal direction. It is noted that as the stereoscopic image display in which a plurality of pinholes are obliquely arranged, Patent Application No. 3096613 is known.

In a general image display, one pixel is constituted of adjacent dots in three colors, that is, red, green, and blue. In the parallax barrier system, and in the stereoscopic image display disclosed in the above-described patent document, as shown in Figure 12, the dots supposed to constitute the same pixel are to represent the images each of which has a different viewpoint. In addition, if the number of viewpoints increases, in a combination of the dots constituting pixels of each viewpoint, caused is dissatisfaction such as not possible to prevent the horizontal-direction resolution from being deteriorated, and so on. Furthermore, in the prior art, an image processing method suitable for the stereoscopic image display is not proposed.

### SUMMARY OF THE INVENTION

In view of the above-described circumstance, it is an object of the present invention to provide an improved stereoscopic image processing method and a stereoscopic image display.

In order to solve the above-described challenge, a stereoscopic image processing method of the present invention is a stereoscopic image processing method for extracting a plurality of dots serving as a pixel unit from a plurality of viewpoint images by each viewpoint image, and data of a plurality of dots serving as a pixel unit is extracted from each viewpoint image, an aggregate of such the data is defined as a pixel group, and an arrangement of pixel units in the pixel group is set so that an aspect ratio of a displayed pitch of the pixel group on a screen of a stereoscopic image display is rendered most approximate to 1:1.

With the above-described configuration, an arrangement of pixel units in the pixel group is set so that an aspect ratio of a displayed pitch of the pixel group on a screen of a stereoscopic image display is rendered most approximate to 1:1, thus resulting in a suitable situation where the dots constituting pixels of each viewpoint are close to one another, and so on. In addition, even in a case that the number of viewpoints increases, it is possible to alleviate a deterioration of horizontal-direction resolution, thus it is expected to improve an image quality.

A stereoscopic image processing method of the present invention is a stereoscopic image processing method for extracting a plurality of dots serving as a pixel unit from a plurality of viewpoint images by each viewpoint image, and data of a plurality of dots serving as a pixel unit is extracted from each viewpoint image, an aggregate of such the data is defined as a pixel group, and an arrangement of pixel units in the pixel group is set so that an aspect ratio of a displayed pitch of the pixel group on a screen of a stereoscopic image display is rendered within a range from 1:2 to 2:1.

In such the configuration, too, the arrangement of the pixel units in the pixel group is set so that an aspect ratio of a displayed pitch of the pixel group on a screen of a stereoscopic image display is rendered within a range from 1:2 to 2:1, thus resulting in a suitable situation where the dots constituting the pixels of each viewpoint are close to one another, and so on. In addition, even in a case that the number of viewpoints increases, it is possible to alleviate a deterioration of horizontal-direction resolution.

The data of a plurality of dots serving as a pixel unit, which is extracted from each viewpoint image, may be obliquely arranged on a bit map. In addition, the data of a plurality of dots serving as a pixel unit, which is extracted from each viewpoint image, may be supplied in such a manner as to be obliquely aligned on a screen of the stereoscopic image display. Furthermore, a video signal may be created and supplied so that the data of a plurality of dots serving as a pixel unit, which is extracted from each viewpoint image, is obliquely aligned on a screen of the stereoscopic image display.

It may be possible that the number of displayed pixels is horizontal M x vertical N, the number of viewpoints is L, the number of dots constituting one pixel is k, the number of pixels of each viewpoint image is horizontal kM/L x vertical N/k, and data of necessary dots is extracted from each viewpoint image by each corresponding image area in each viewpoint image. According thereto, although coordinates of dots of each viewpoint image are not inherited to a stereoscopic vision-use image, there is no dots to be abandoned in each viewpoint image, thus possible to eliminate a waste of an unused image portion being created. Furthermore, it may be possible that the number of pixels of each viewpoint image is horizontal kM/L x vertical N/k, an image obtained in an image obtaining system is processed so that an aspect ratio of an image is coincident with an aspect ratio of a displayed image, and each viewpoint image is obtained. According thereto, it becomes possible to prevent a displayed image from being distorted. In addition, it may be possible that an aspect ratio of an image of an image obtaining system is rendered coincident with an aspect ratio of a displayed image, and each viewpoint image is obtained. According thereto, it is possible to prevent a displayed image from being distorted.

It may be possible that the number of displayed pixels is horizontal M x vertical N, the number of viewpoints is L, the number of dots constituting one pixel is k, the number of pixels of each viewpoint image is horizontal kM/L x vertical N/k, each obtained viewpoint image is applied to a magnifying process so as to become horizontal M x vertical N, and data of necessary dots is extracted and generated from each viewpoint image by each corresponding image area in each viewpoint image. According thereto, it is possible to prevent a displayed image from being distorted. In addition, in this processing method, although a memory used at a time of composition increases, a charge on an image obtaining system is small compared to a case of obtaining from a start the image by a size of the displayed image (composed image).

It may be possible that each viewpoint image is rendered large by adding one to several dots on both sides, and data extracted from the added dots is used in a non-data area to be occurred on both sides of a screen. Or, it may be possible that black data is used in a non-data area to be occurred on both sides of a screen. Or, it may be possible that copied data of the dots having the same viewpoint adjacent to the non-data area is used.

In addition, it may be possible that a stereoscopic vision-use image that also has a parallax in a vertical direction is generated.

Furthermore, a stereoscopic image display of the present invention is a stereoscopic image display provided with a screen on which an image is displayed, and a separating means for separating a position capable of observing dots of each viewpoint image, and characterized in that when the image obtained by any one of the stereoscopic image processing methods described above is displayed on the screen, an aspect ratio of a screen dot pitch is set so that an aspect ratio of a pitch of displayed pixel groups on the screen is rendered from 1:1 to approximately 1:1. It may be configured such that if the number of viewpoints is L and the number of dots constituting one pixel is k, a pitch of a displayed dot is set to k (horizontal):L (vertical) and an aspect ratio of displayed pixel groups is rendered horizontal:vertical equal (=) to 1:1.

In the above configurations, it may be configured such that a red color-use dot row, a green color-use dot row, and a blue color-use dot row are arranged in sequence in a vertical direction. According thereto, an alignment of the colors of the dots constituting the pixel is rendered the same, and thus, an image quality of a screen edge is improved. In addition, a stereoscopic image display of the present invention is a stereoscopic image display provided with a screen on which an image is displayed, and a separating means for separating a position capable of observing dots of each viewpoint image, and configured such that the number of viewpoints is L, an aspect ratio of a screen dot pitch is set to kL:1 to approximately kL:1, an image in which dot data of each viewpoint image is set in sequence in a horizontal direction is supplied so as to display an image, and an aspect ratio of a pitch of a displayed pixel group on a screen is rendered 1:1 to approximately 1:1. In such the configuration, the same color dots of which number corresponds to the number of viewpoint images may be arranged successively. According thereto, the alignment of the colors of dots constituting the pixel is rendered the same, and thus, the image quality of the screen edge is improved.

### BRIEF DESCRIPTION OF THE DRAWINGS

Figure 1 is a view showing an embodiment of the present invention, and a descriptive diagram showing a color alignment of dots, a size of a dot area, and an image displayed in the dots on a screen;
Figure 2 is a descriptive diagram showing the color alignment of a screen in Figure 1;
Figure 3 is a descriptive diagram showing a process for composing a displayed image from a plurality of pieces of original images;
Figure 4 is a view showing an embodiment of the present invention, and a descriptive diagram showing a process for composing a displayed image from a plurality of pieces of original images;
Figure 5 is a view showing an embodiment of the present invention, and a descriptive diagram showing a color alignment of dots, a size of a dot area, and an image displayed in the dots on a screen;
Figure 6 is a view showing an embodiment of the present invention, and a descriptive diagram showing a color alignment of dots, a size of a dot area, and images displayed in the dots on a screen;
Figure 7 is a view showing an embodiment of the present invention, and a descriptive diagram showing a color alignment of dots, a size of a dot area, and images displayed in the dots on a screen;
Figure 8 is a view showing an embodiment of the present invention, and a descriptive diagram showing a color alignment of dots, a size of a dot area, and images displayed in the dots on a screen;
Figure 9 is a view showing an embodiment of the present invention, and a descriptive diagram showing a color alignment of dots, a size of a dot area, and images displayed in the dots on a screen;
Figure 10 is a view showing an embodiment of the present invention, and a descriptive diagram showing a color alignment of dots, a size of a dot area, and images displayed in the dots on a screen;
Figure 11 is a descriptive diagram showing a basic configuration of a multi-viewpoint stereoscopic image display;
Figure 12 (a) and Figure 12 (b) are views each of which shows a conventional example, and descriptive diagrams showing a color alignment of dots, a size of a dot area, and images displayed in the dots on a screen;
Figure 13 is a view showing an embodiment of the present invention, and, a descriptive diagram showing a process for composing a displayed image from a plurality of pieces of original images;
Figure 14 is a view showing an embodiment of the present invention, and a descriptive diagram showing a process for composing a displayed image from a plurality of pieces of original images;
Figure 15 is a view showing an embodiment of the present invention, and a descriptive diagram showing a process for composing a displayed image from a plurality of pieces of original images;
Figure 16 a view showing an embodiment of the present invention, and, a descriptive diagram showing a color alignment of dots, a size of a dot area, and images displayed in the dots on a screen;
Figure 17 is a view showing an embodiment of the present invention, and, a descriptive diagram showing a color alignment of dots, a size of a dot area, and images displayed in the dots on a screen;
Figure 18 is a view showing an embodiment of the present invention, and, a descriptive diagram showing a color alignment of dots, a size of a dot area, and images displayed in the dots on a screen;
Figure 19 is a view showing an embodiment of the present invention, and, a descriptive diagram showing a color alignment of dots, a size of a dot area, and images displayed in the dots on a screen;
Figure 20 is a view showing an embodiment of the present invention, and, a descriptive diagram showing a color alignment of dots, a size of a dot area, and images displayed in the dots on a screen;
Figure 21 is a view showing an embodiment of the present invention, and, a descriptive diagram showing a color alignment of dots, a size of a dot area, and images displayed in the dots on a screen; and
Figure 22 is a descriptive diagram representing the process in Figure 14.

### BEST MODE FOR PRACTICING THE INVENTION

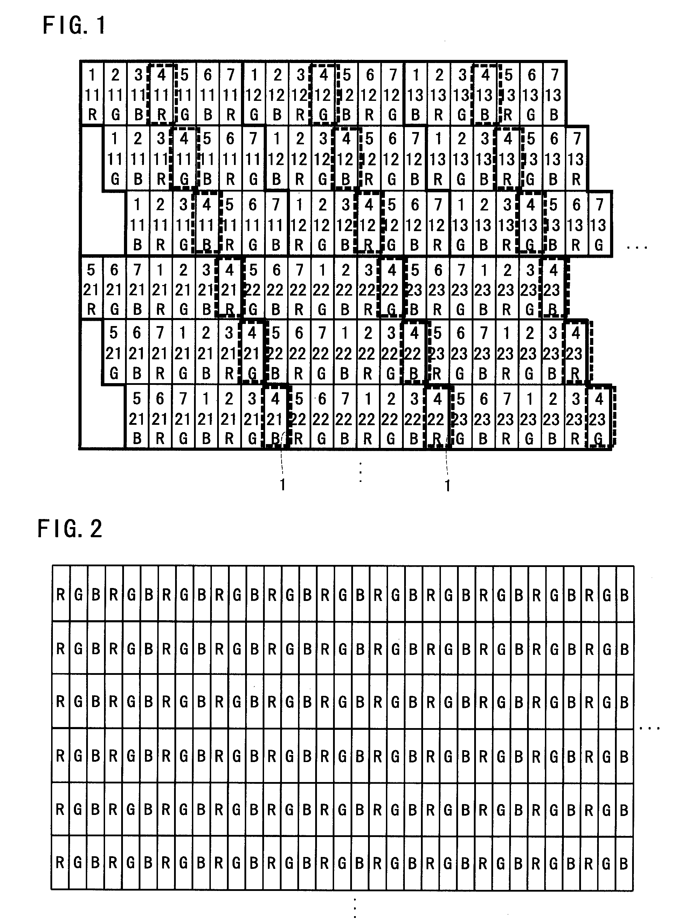

Hereinafter, a stereoscopic image processing method and a stereoscopic image display of an embodiment of the present invention will be described based on Figure 1 to Figure 9, and Figure 13 to Figure 22. It is noted that regarding an entire configuration of the stereoscopic image display, a configuration in Figure 11 described in the prior art section is adoptable, and in order to avoid redundancy due to a duplicated description, a description of the entire configuration is omitted.

Figure 1 shows a color alignment (R, G, and B columns) of dots, a size of a dot area, and an image displayed in the dots on a screen of the stereoscopic image display. Herein, the number of each viewpoint image is seven (seven-viewpoint type), data of dots of red, green, and blue (RGB), serving as a pixel unit, which are extracted from each viewpoint image by each corresponding image area in each viewpoint image and, is applied to the dots obliquely arranged, and an image separation is performed by an aperture 1 indicated by a dotted line in Figure 1, for example. A cluster of 21 dots surrounded by a bold line constitutes one pixel group, the aperture 1 corresponds thereto, and from a specific observing position, the dots in three colors of {1; 11; R}, {1; 11; G}, and {1; 11; B} constituting an upper left pixel of a viewpoint 1 is simultaneously observed. Herein, {i; jk; C} represents {viewpoint; pixel coordinates; color}, respectively. In addition, in accordance with a movement of the observing position, pixels having different viewpoints such as {2; 11; G}, {2; 11; B}, {2; 11; R} ... are observed on the same pixel coordinate 11.

As a screen (display), the screen capable of optimally displaying a plane image is used. As one example, a liquid crystal panel having the number of pixels of horizontal 3840 x vertical 2400 is to be used. Each pixel is formed of a combination of the dots in three colors, i.e., red, green, and blue. As shown in Figure 2, the dots of the same color are aligned in a vertical direction, an aspect ratio of this dot pitch is 3 (vertical): 1 (horizontal), and a horizontal pitch and a vertical pitch of the pixel in the plane image displaying are the same in length. That is, an aspect ratio of the pixel pitch is 1:1, and this is a value desired in the plane image displaying.

Herein, the number of pixel groups in a horizontal direction and the number of pixel groups in a vertical direction according to the stereoscopic image processing method shown in Figure 12 in the prior art section are to exist as shown below on the screen having the number of pixels of horizontal 3840 x vertical 2400. It is noted that a value in parentheses is a value as an example:
The number of viewpoints L (7)
The number of pixels in a display area horizontal M x vertical N (3840 x 2400)
The number of pixel groups in the horizontal direction M/L
   (approximately equal (≒) to 548)
The number of pixel groups in the vertical direction N (2400)

Contrary thereto, in the stereoscopic image processing method of this embodiment in which the pixel groups are selected as shown in Figure 1, it is possible to disperse a decrease (deterioration) of the number of pixels into a vertical direction. Herein, three dots aligned in an oblique direction are combined so as to constitute one pixel, so that a vertical pitch of the pixel group is three times greater, and a horizontal pitch is 7/3 times greater. A value of a ratio of the horizontal pitch to the vertical pitch is 7/9, which is a value brought approximate to 1, i.e., a value of a ratio of the horizontal pitch to the vertical pitch of the pixel in an original plane image displaying.

This is generally represented as follows. It is noted that a value in parentheses is a value as an example.
The number of viewpoints L (7)
The number of pixels in a display area horizontal M x vertical N (3840 x 2400)
The number of dots constituting one pixel k (3)
The number of pixel groups in the horizontal direction M x k/L
(approximately equal (≒) to 1646)
The number of pixel groups in the vertical direction N/k (800)

As described above, an arrangement of displayed pixels is set so that an aspect ratio of a pitch of the displayed pixel group on the screen of the stereoscopic image display is most approximate to 1:1, thus the dots constituting the pixels of each viewpoint are suitably close to one another. As a result, even in a case that the number of viewpoints increases, it is possible to alleviate a deterioration of a horizontal-direction resolution, thus possible to expect an improved image quality.

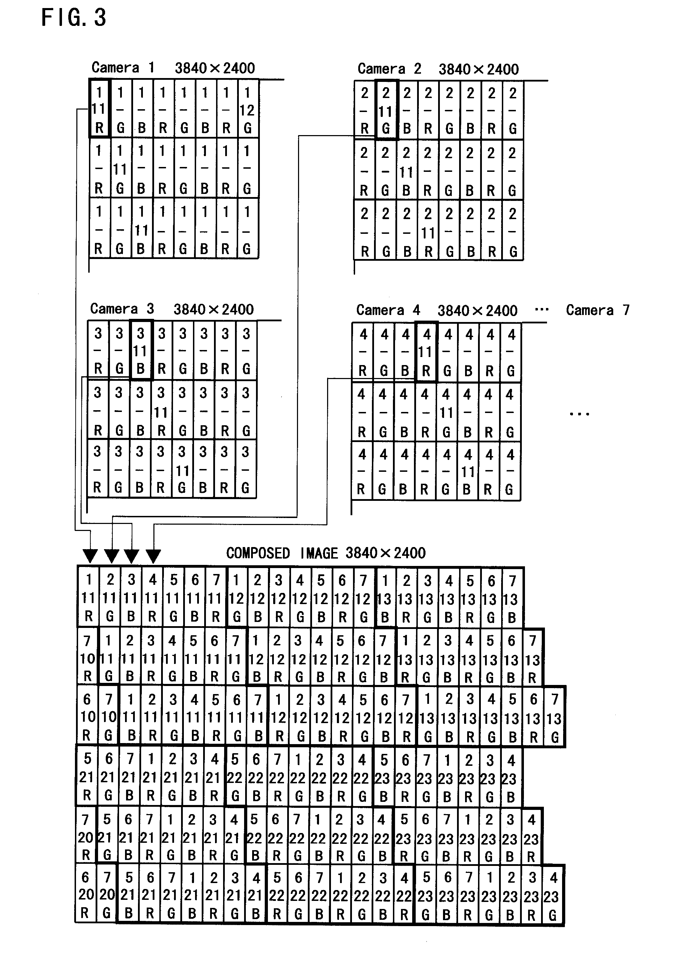

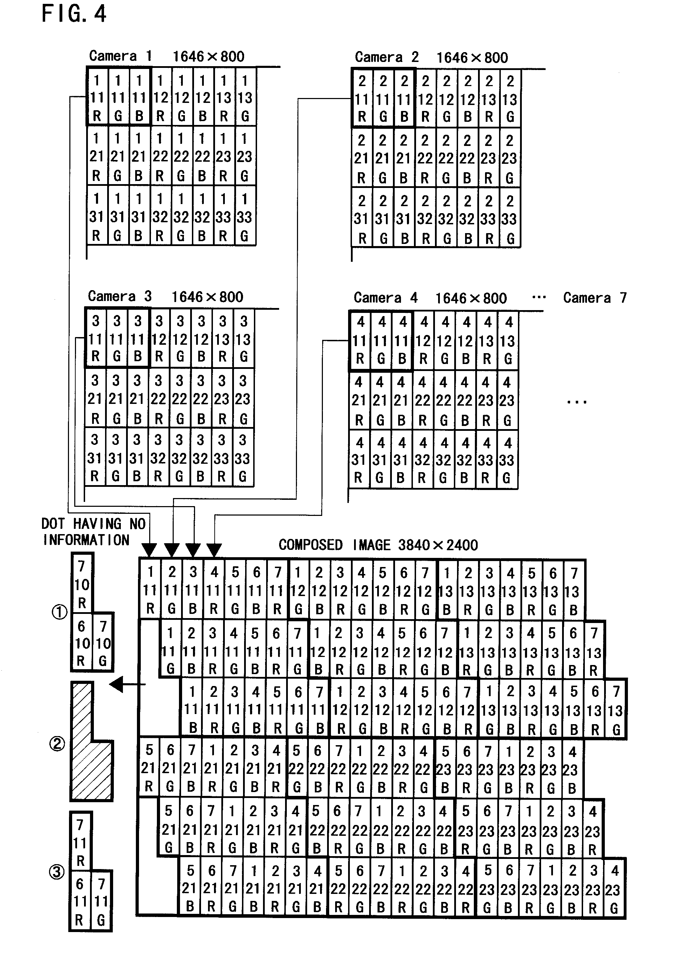

Herein, a process in which the above displayed image is created from the L of original images will be taken into consideration. First, as shown in Figure 3, there is a method in which with respect to the number of pixels M x N (3840 x 2400) of the displayed image, the number of pixels of each original image (camera photographed image, and others), too, is M x N (3840 x 2400), and only necessary dots are selected and composed. In this method, although coordinates of the dots are exactly inherited, there exists dots to be abandoned, thus possible to eliminate a waste of an unused image portion being created. The dots having the pixel coordinates "-" are to be abandoned. Contrary to such the stereoscopic image processing method, an improved stereoscopic image processing method will be described based on Figure 4.

In a method shown in Figure 4, the number of pixels of the original images (camera photographed image, and others) is kM/L x N/k (1646 x 800), and the alignment of the dots is appropriately changed so as to compose the images. In this method, although the coordinates of the dots are not exactly inherited, there are no dots to be abandoned, thus possible to eliminate a waste of an unused image portion being created. It is noted that if an image aspect ratio of an image obtaining system is M (horizontal):N (vertical), no distortion is produced to the images. That no distortion is produced is in a case that the aspect ratio of the pixel pitch is 1:1, and more generally, if the image aspect ratio of the image obtaining system is rendered coincident with the aspect ratio of the displayed images, no distortion is produced to the images. The image aspect ratio of the image obtaining system means an aspect ratio of a CCD (charge-coupled device) of a live-action camera, an image aspect ratio at a time of rendering in a computer graphic, for example.

Although dots having no information are generated on both sides of the screen, this may be processed according to one of following steps of: ① rendering each viewpoint image large by adding one dot to several dots to the needed dots (dots actually used for a stereoscopic vision) on both sides, and arranging data extracted from the added dots into non-data areas to be occurred on both sides of the screen. If the pixel coordinate of the added dots is "10", in the non-data areas on the upper left of the composed image, {7; 10; R}, {7; 10; G}, and {6; 10; R} are arranged, for example; ② arranging black data (non-light turned on, light non-transparent) in the non-data areas to be occurred on both sides of the screen; and ③ arranging copied data of the dots having the same viewpoint adjacent to the non-data areas. In an example in Figure 4, {7; 11; R}, {7; 11; G}, and {6; 11; R} are arranged.

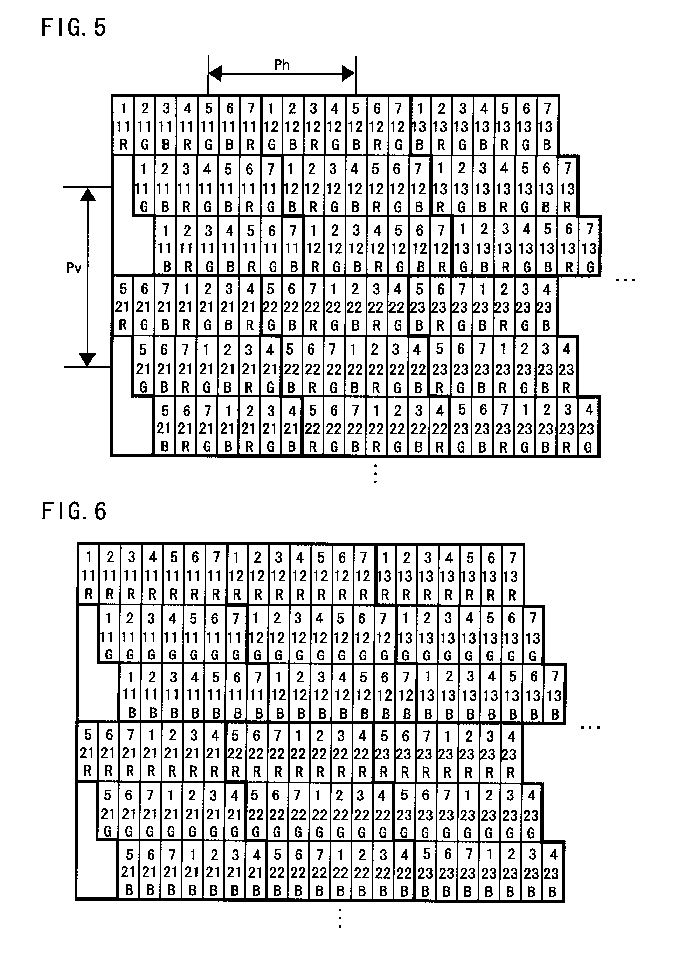

In Figure 5, a stereoscopic image display of which aspect ratio of the dot pitch is not 3 (vertical): (horizontal) is shown. In a case that the aspect ratio of the dot pitch is 3 (vertical): 1 (horizontal), according to the above-described stereoscopic image processing method, a value of a ratio of a horizontal pitch to the vertical pitch of the displayed pixel group is 7/9. Contrary thereto, in Figure 5, the aspect ratio of the dot pitch is 7 (vertical):3 (horizontal). This makes a value of a ratio Ph/Pv to the vertical pitch of the horizontal pitch of the displayed pixel group equal to "1", i.e., a desired value in the plane image displaying. As a result of Ph/Pv being "1", it becomes possible that the aspect ratio of the pixel pitch at a time of imaging is 1:1, thus possible to use an existing apparatus or computer program as it is.

In Figure 6, a stereoscopic image display having a color alignment different from the color alignment shown in Figure 1 is shown. Although in the stereoscopic image display in Figure 1, the red-color column, the green-color column, and the blue-color column are arranged in sequence in the horizontal direction, a red-color row, a green-color row, and a blue-color row are arranged in sequence in the vertical direction. In such the configuration, an aligning order of the colors of the dots constituting the pixel is the same, thus an image quality with respect to a display of an edge is improved.

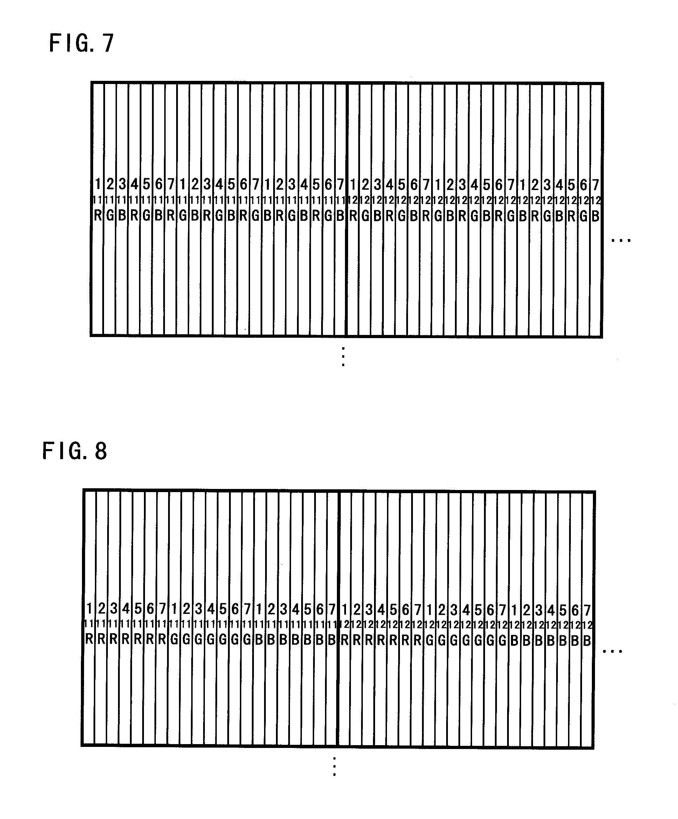

In Figure 7, a seven-viewpoint stereoscopic image display of another embodiment is shown. In this stereoscopic image display, the aspect ratio of the dot pitch on the screen is 21 (vertical):1 (horizontal) (kL:1). In addition, one pixel group is constituted of 21 dots aligned in the horizontal direction. This makes a value of a ratio of the horizontal pitch to the vertical pitch of the pixel group equal to "1", i.e., a desired value in the plane image displaying. It is noted that in a case of adopting such the dot pitch, a manner of selecting the pixel group is changed. Furthermore, depending on the number of viewpoints, the aspect ratio of the dot pitch is changed.

Figure 8 shows a seven-viewpoint stereoscopic image display shown similar to that shown in Figure 7, and different in the color alignment of the dots. As shown in Figure 8, seven dots from the left are red, the seven dots that follow are green, and the last seven dots are blue. This makes the aligning order of the colors of the dots constituting the pixels the same, thus an image quality with respect to the display of the edge is improved.

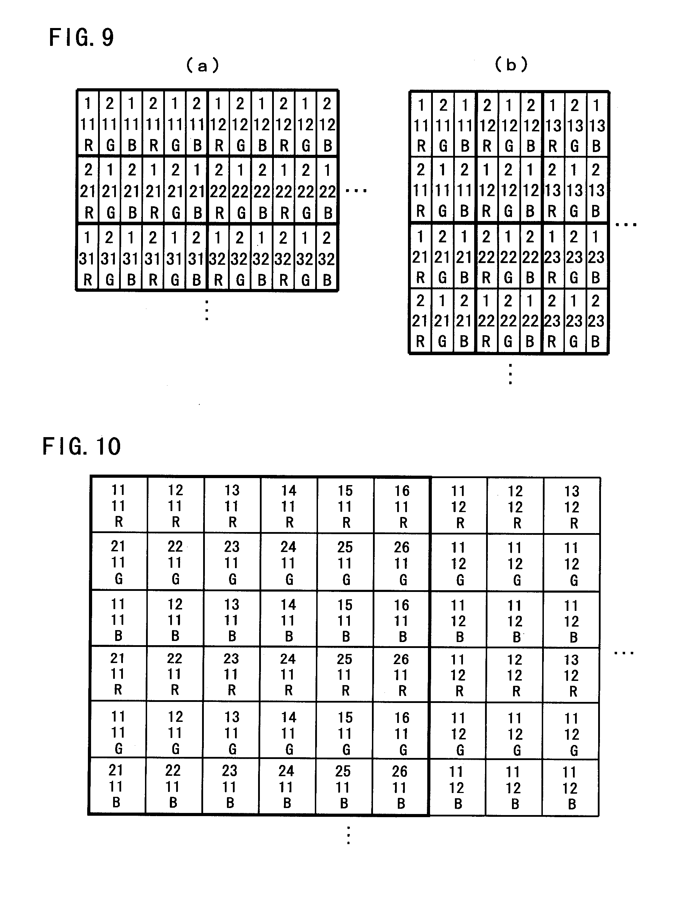

In Figure 9, a pixel arrangement in the displayed pixel group shown in Figure 9 (a), and a pixel arrangement in the displayed pixel group shown in Figure 9 (b) are different. It is noted that each adopts a two-viewpoint oblique dot system (oblique barrier system). In view of the pixel pitch (dot pitch) in the stereoscopic image display of the two-viewpoint oblique dot system, the stereoscopic image processing method shown here is rendered capable of switching the arrangements of pixels in the displayed pixel group to one of Figure 9 (a) and Figure 9 (b) so that the aspect ratio of the pitch of the displayed pixel group (see bold lines in Figure 9) on the screen of the stereoscopic image display is rendered most approximate to 1:1. For example, in a case that the image processing device is configured to be capable of generating the both images in Figure 9 (a) and Figure 9 (b), and even in a case of purchasing a liquid crystal display panel or a plasma display of which pixel pitches differ to each other as a stereoscopic image display connected to this image processing display, it is possible to bring the aspect ratio of the pitch of the displayed pixel group close to 1:1 by generating one of the images in Figure 9 (a) and in Figure 9 (b).

In Figure 10, an example of a configuration in which there is a parallax in the vertical direction, too, is shown. The horizontal and vertical dot pitches are rendered equal so that distances between the viewpoints in the horizontal and vertical directions are the same. In addition, because the number of viewpoints is greater in the horizontal direction, the dots having the same color are aligned in the vertical direction. By configuring this manner, in a case of a horizontal six-viewpoint system, and a vertical two-viewpoint system, a value of a ratio of the horizontal pitch to the vertical pitch of the pixel group is one. The aligning order of the colors of the dots constituting the pixels, too, is rendered the same. It is noted that the distances between the viewpoints in the horizontal and vertical directions are not necessarily the same.

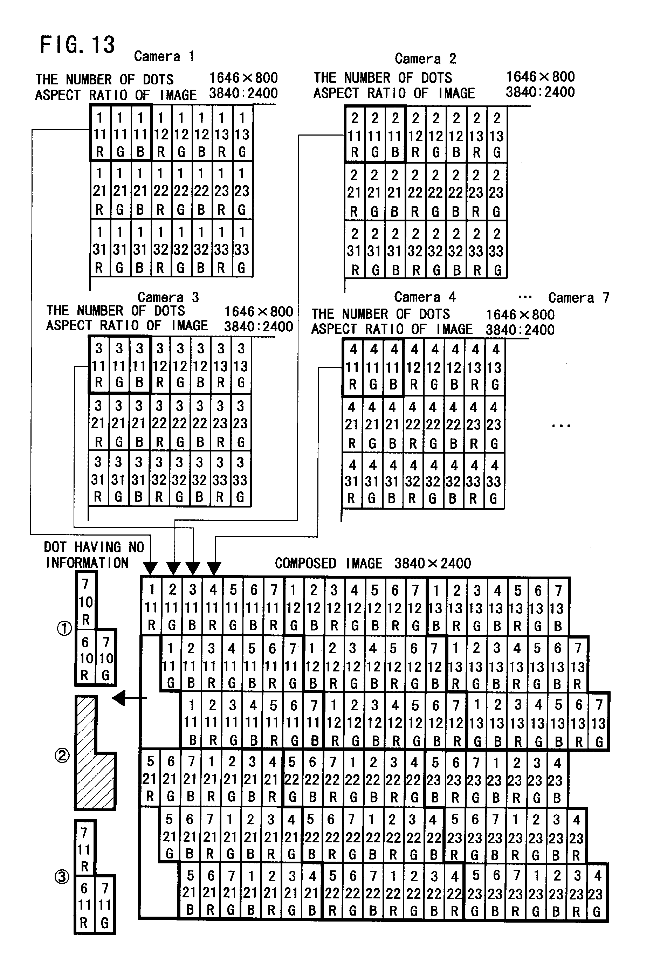

Figure 13 is a modified example of the method shown in Figure 4, and shows an example having no image distortion. This example is a method for extracting data of necessary dots from each viewpoint image by each corresponding image area in each viewpoint image, where the number of displayed pixels is horizontal M (3840) x vertical N (2400), the number of viewpoints is L (7), the number of dots constituting one pixel is k (3), the number of pixels of each viewpoint image is horizontal kM/L (1646) x vertical N/k (800). In addition, an aspect ratio of the image of the image obtaining system is rendered equal to an aspect ratio of the displayed image (2400 (vertical):3840 (horizontal)), and each viewpoint image is obtained. In the above-described case, an aspect ratio of the pixels of each camera is not 1:1, but the ratio is horizontal:vertical equal (=) to 7:9.

As described above, if an appropriate number of dots and an aspect ratio of the image are obtained in the image obtaining system, the image is prevented from being distorted. However, in a case of not obtaining the same, a compression/expansion process may be applied toward each viewpoint image so as to prevent the image from being distorted. The dot of an ordinary camera has a ratio of horizontal:vertical equal (=) to 1:1 (square), so that the compression/expansion process may be applied thereto.

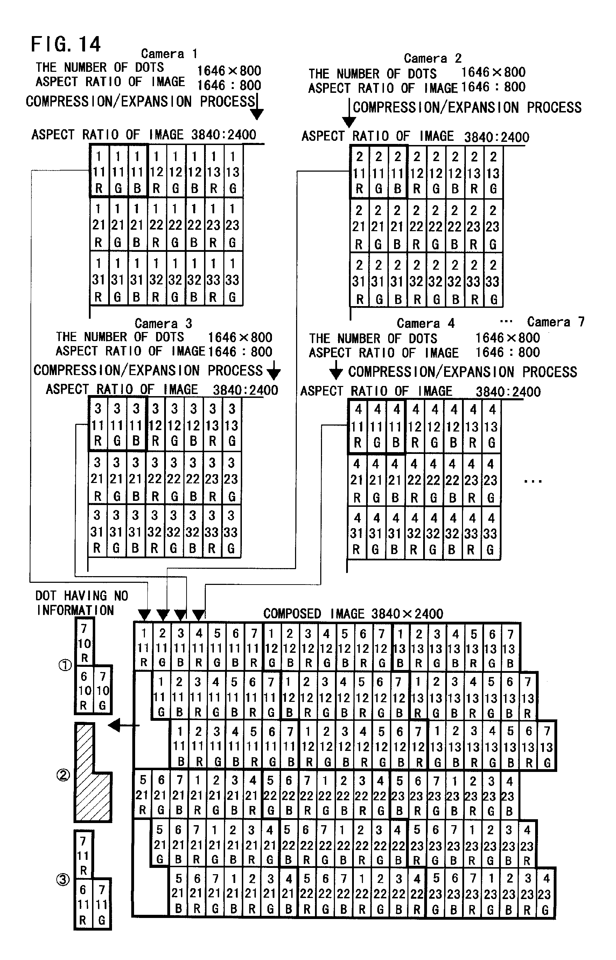

Figure 14 shows one example of the compression/expansion process. In this example, the number of displayed pixels is horizontal M (3840) x vertical N (2400), the number of viewpoints is L (7), the number of dots constituting one pixel is k (3), and the number of pixels of each viewpoint image is horizontal kM/L (1646) x vertical N/k (800). In addition, the image (the number of dots 1646 (horizontal) x 800 (vertical), an aspect ratio of the image of 1646 (horizontal) x 800 (vertical)) obtained in the image obtaining system is processed so that the aspect ratio of the obtained image is equal to the aspect ratio (3840 (horizontal):2400 (vertical)) in the displayed image, and each viewpoint image is obtained.

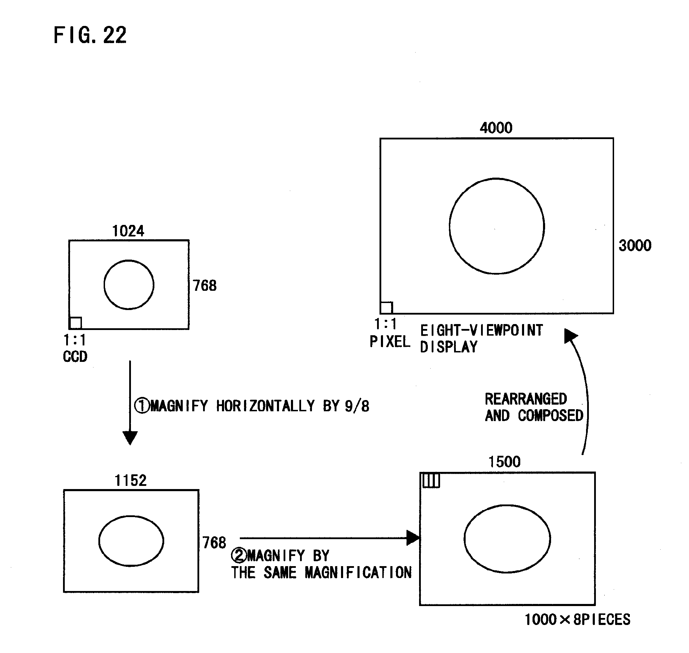

The above-described process will be further described using Figure 22. It is noted that in this Figure 22, the number of dots of the camera (the image obtained in the image obtaining system) is 1024 (horizontal) x 768 (vertical), and the number of viewpoints is eight. If the images of each camera are magnified by 9/8 times in the horizontal direction, images of 1152 (horizontal) x 768 (vertical) are obtained. As a result of these images being magnified by the same magnification, images of 1500 (horizontal) x 1000 (vertical) are obtained. If the displayed image is generated by these eight pieces of the images, the number of pixels of the displayed image is horizontal (M = 4000), (that is, 1500 x by 8/3 = 4000), and vertical (N = 3000), (that is, 1000 x 3). The screen of the display device is 4 (horizontal):3 (vertical), and the pitch of the pixel is 1:1.

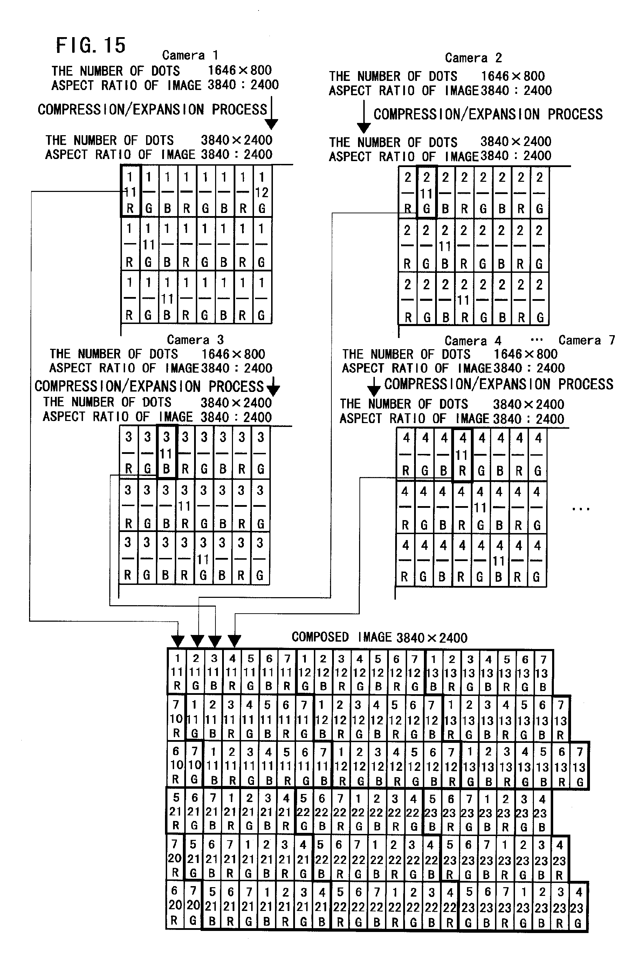

In Figure 15 shown is an improved version of an example of the process in Figure 3, and after the camera image is converted into a size of the displayed image (composed image), the composition is carried out by a thinning-out. In this example, the number of the displayed pixels is horizontal M (3840) x vertical N (2400), the number of viewpoints is L (7), the number of dots constituting one pixel is k (3), each obtained viewpoint image (horizontal kM/L (1646) x vertical N/k (800)) is applied to an enlarging process to horizontal M (3840) x vertical N (2400), and data of the necessary dots extracted and generated from each viewpoint image by each corresponding image area. In this process method, although a memory used at a time of the composition increases, a charge on the image obtaining from a start system (a camera or computer graphic process) is small, compared to a case of obtaining the data by a size of the displayed image (composed image) as in Figure 3.

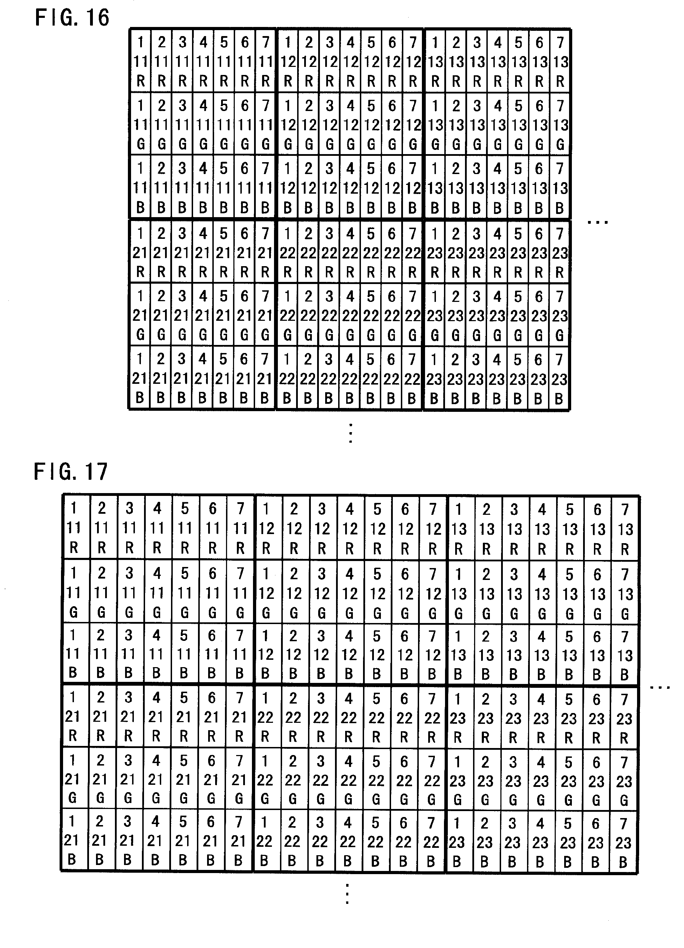

Figure 16 shows an example of an arrangement of the displayed images in a case that the screen (color filter) is a horizontal stripe. The arrangement of the displayed images is a vertical stripe arrangement, and R dots, G dots, and B dots of each viewpoint are formed in the vertical direction. The aspect ratio of a pitch of each dot is 1 (horizontal):3 (vertical), and the aspect ratio of the pixel group is horizontal:vertical = 7:9.

Figure 17 shows an example of an arrangement of the displayed images in a case that the screen (color filter) is a horizontal stripe. The arrangement of the displayed images is a vertical stripe arrangement, and R dots, G dots, and B dots of each viewpoint are formed in the vertical direction. The aspect ratio of a pitch of each dot is 3 (horizontal):7 (vertical), and the aspect ratio of the pixel group is horizontal:vertical = 1:1. If this is expressed generally, the pitch of each dot is k (horizontal):L (vertical), and the aspect ratio of the pixel group is horizontal:vertical = 1:1. It is noted that the L is the number of viewpoints, and the k is the number of dots constituting one pixel.

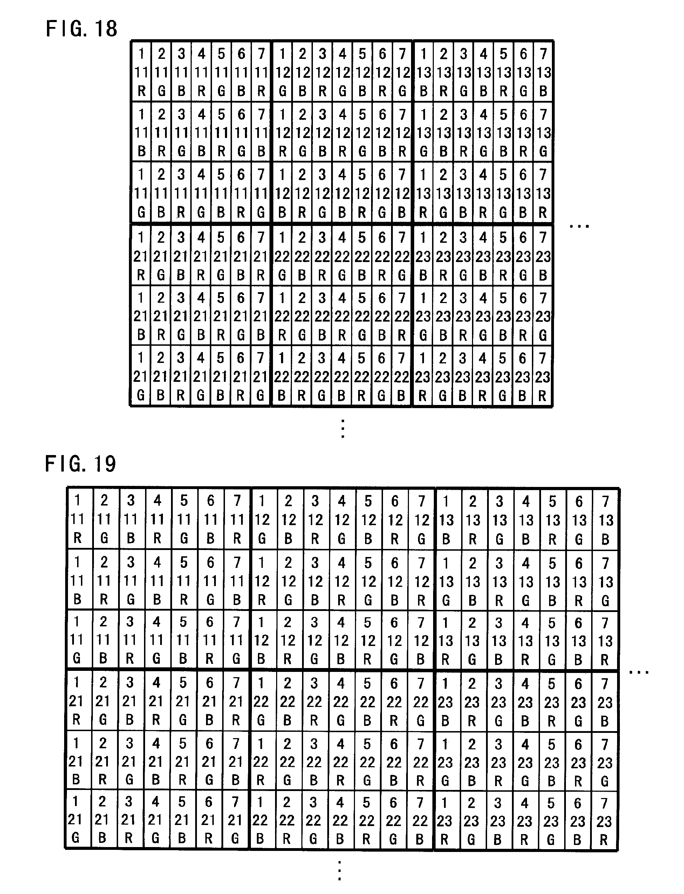

Figure 18 shows an example of an arrangement of the displayed images in a case that the screen (color filter) is diagonal. The arrangement of the displayed images is a vertical stripe arrangement, and R dots, G dots, and B dots of each viewpoint are formed in the vertical direction. The aspect ratio of a pitch of each dot is 1 (horizontal):3 (vertical), and the aspect ratio of the pixel group is horizontal:vertical = 7:9.

Figure 19 shows an example of an arrangement of the displayed images in a case that the screen (color filter) is diagonal. The arrangement of the displayed images is a vertical stripe arrangement, and R dots, G dots, and B dots of each viewpoint are formed in the vertical direction. The aspect ratio of a pitch of each pixel is 3 (horizontal):7 (vertical), and the aspect ratio of the pixel group is horizontal:vertical = 1:1. If this is expressed generally, the pitch of each pixel is k (horizontal):L (vertical), and the aspect ratio of the pixel group is horizontal:vertical = 1:1. It is noted that the L is the number of viewpoints, and the k is the number of dots constituting one pixel.

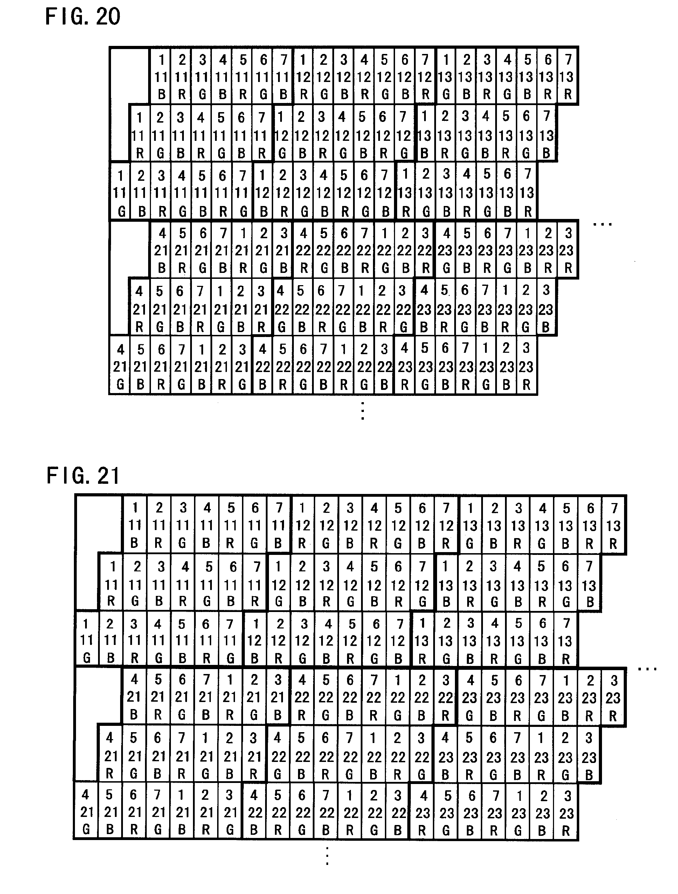

Figure 20 shows an example of an arrangement of the displayed images in a case that the screen (color filter) is diagonal. The arrangement of the displayed images is an oblique arrangement, and R dots, G dots, and B dots of each viewpoint are formed in an oblique direction. The aspect ratio of a pitch of each pixel is 1 (horizontal):3 (vertical), and the aspect ratio of the pixel group is horizontal:vertical = 7:9.

Figure 21 shows an example of an arrangement of the displayed images in a case that the screen (color filter) is diagonal. The arrangement of the displayed images is an oblique arrangement, and R dots, G dots, and B dots of each viewpoint are formed in the oblique direction. The aspect ratio of a pitch of each pixel is 3 (horizontal):7 (vertical), and the aspect ratio of the pixel group is horizontal:vertical = 1:1. If this is expressed generally, the pitch of each pixel is k (horizontal):L (vertical), and the aspect ratio of the pixel group is horizontal:vertical =1:1. It is noted that the L is the number of viewpoints, and the k is the number of dots constituting one pixel.

It is noted that an element of an image separation is not limited to an aperture such as a pinhole, and others, and a lens element may be used. In addition, it may be configured such that an image separating means is arranged on a light-source side. Furthermore, although the dot constituting one pixel is the RGB (K=3), in a case that the dot constituting one pixel is an RGGB, it may be processed that K is equal (=) to 4.

As described above, according to the present invention, the dots constituting the pixel of each viewpoint are close to one another, thus an appropriate situation. In addition, even in a case that the number of viewpoints increases, it is possible to alleviate a deterioration of a horizontal-direction resolution, and as a result, the present invention brings about desirable effects such as an improved image quality to be expected, and so on.

## Claims

1. A stereoscopic image processing method for extracting a plurality of dots serving as a pixel unit from a plurality of viewpoint images by each viewpoint image, wherein
data of a plurality of dots serving as a pixel unit is extracted from each viewpoint image, an aggregate of such the data is defined as a pixel group, and an arrangement of pixel units in said pixel group is set so that an aspect ratio of a displayed pitch of said pixel group on a screen of a stereoscopic image display is rendered most approximate to 1:1.

2. A stereoscopic image processing method for extracting a plurality of dots serving as a pixel unit from a plurality of viewpoint images by each viewpoint image, wherein
data of a plurality of dots serving as a pixel unit is extracted from each viewpoint image, an aggregate of such the data is defined as a pixel group, and an arrangement of pixel units in said pixel group is set so that an aspect ratio of a displayed pitch of said pixel group on a screen of a stereoscopic image display is rendered within a range from 1:2 to 2:1.

3. A stereoscopic image processing method according to claim 1 or claim 2, wherein the data of a plurality of dots serving as a pixel unit, which is extracted from each viewpoint image, is obliquely arranged on a bit map.

4. A stereoscopic image processing method according to claim 1 or claim 2, wherein the data of a plurality of dots serving as a pixel unit, which is extracted from each viewpoint image, is supplied so as to be obliquely aligned on a screen of the stereoscopic image display.

5. A stereoscopic image processing method according to claim 1 or claim 2, wherein a video signal is created and supplied so that the data of a plurality of dots serving as a pixel unit, which is extracted from each viewpoint image, is obliquely aligned on a screen of the stereoscopic image display.

6. A stereoscopic image processing method according to any one of claims 1 to 5, wherein the number of displayed pixels is horizontal M x vertical N, the number of viewpoints is L, the number of dots constituting one pixel is k, the number of pixels of each viewpoint image is horizontal kM/L x vertical N/k, and data of necessary dots is extracted from each viewpoint image by each corresponding image area in each viewpoint image.

7. A stereoscopic image processing method according to claim 6, wherein the number of pixels of each viewpoint image is horizontal kM/L x vertical N/k, and an image obtained in an image obtaining system is processed so that an aspect ratio of an image is coincident with an aspect ratio of a displayed image and each viewpoint image is obtained.

8. A stereoscopic image processing method according to claim 6, wherein an aspect ratio of an image of an image obtaining system is rendered coincident with an aspect ratio of a displayed image, and each viewpoint image is obtained.

9. A stereoscopic image processing method according to any one of claims 1 to 5, wherein the number of displayed pixels is horizontal M x vertical N, the number of viewpoints is L, the number of dots constituting one pixel is k, the number of pixels of each viewpoint image is horizontal kM/L x vertical N/k, each obtained viewpoint is applied to a magnifying process so as to become horizontal M x vertical N, and data of necessary dots is extracted and generated from each viewpoint image by each corresponding image area in each viewpoint image.

10. A stereoscopic image processing method according to any one of claims 6 to 9, wherein each viewpoint image is rendered large by adding by one to several dots on both sides, and the data extracted from said added dots is used in a non-data area to be occurred on both sides of a screen.

11. A stereoscopic image processing method according to any one of claims 6 to 9, wherein black data is used in a non-data area to be occurred on both sides of a screen.

12. A stereoscopic image processing method according to any one of claims 6 to 9, wherein in a non-data area to be occurred on both sides of a screen, copied data of the dots having the same viewpoint adjacent to the non-data area is used.

13. A stereoscopic image processing method according to any one of claim 1 or 2, wherein a stereoscopic vision-use image that also has a parallax in a vertical direction is generated.

14. A stereoscopic image display provided with a screen on which an image is displayed, and a separating means for separating a position capable of observing dots of each viewpoint image, wherein
when the image obtained by the stereoscopic image processing method according to any one of claims 1 to 13 is displayed on the screen, an aspect ratio of a screen dot pitch is set so that an aspect ratio of a pitch of a displayed pixel group on the screen is rendered 1:1 to approximately 1:1.

15. A stereoscopic image display according to claim 14, configured such that if the number of viewpoints is L, and the number of dots constituting one pixel is k, a pitch of displayed dots is set to k (horizontal):L (vertical), and an aspect ratio of a displayed pixel group is rendered horizontal:vertical equal (=) to 1:1.

16. A stereoscopic image display provided with a screen on which an image is displayed, and a separating means for separating a position capable of observing dots of each viewpoint image, configured such that a pitch of displayed dots is k, the number of viewpoints is L, an aspect ratio of a screen dot pitch is set to kL:1 to approximately kL: 1, an image in which dot data of each viewpoint image is set in sequence in a horizontal direction is supplied so as to display an image, and an aspect ratio of a pitch of a displayed pixel group on a screen is rendered 1:1 to approximately 1:1.

17. A stereoscopic image display according to any one of claims 1 to 15, wherein a red color-use dot row, a green color-use dot row, and a blue color-use dot row are arranged in sequence in a vertical direction.

18. A stereoscopic image display according to claim 16, wherein the same color dots of which number corresponds to the number of viewpoint images are arranged successively.
